# FASCICULE DE BREVET EUROPEEN

(11) **EP 2 346 931 B1**
(45) Date de publication et mention de la délivrance du brevet: **29.08.2018**
(21) Numéro de dépôt: 09768147.2
(22) Date de dépôt: 04.11.2009
(51) Int. Cl.: C08J 7/04, C08K 3/00, C08K 3/36, C08K 3/38, H01B 3/30, H01B 3/46, H01B 7/29

(54) **CABLE ELECTRIQUE RESISTANT AU FEU**
FLAMMWIDRIGES ELEKTROKABEL
FIREPROOF ELECTRIC CABLE

(30) Priorité: 13.11.2008 FR 0857667
(43) Date de publication de la demande: 27.07.2011
(73) Titulaire: Nexans, 92400 Courbevoie (FR)
(72) Inventeur: GOUTILLE, Yannick, F-75008 Paris (FR); CLERTANT, Alain, F-75008 Paris (FR); ROUSSELET, Nicolas, F-75008 Paris (FR)
(74) Mandataire: Peguet, Wilfried
(86) Numéro de dépôt international: PCT/FR2009/052135
(87) Numéro de publication internationale: WO 2010/055247

(56) Documents cités:
- EP-A- 0 708 455
- EP-A- 0 942 439
- FR-A- 2 241 580
- FR-A- 2 573 910

## Description

La présente invention se rapporte à un câble électrique comprenant un ensemble de conducteurs électriques isolés ainsi qu'à un procédé de fabrication dudit câble.

Elle s'applique typiquement, mais non exclusivement, au domaine des câbles de sécurité résistant au feu et notamment sans halogène, susceptible de fonctionner pendant un laps de temps donné dans des conditions d'incendie, sans être pour autant propagateur d'incendie ni générateur de fumées importantes. Ces câbles de sécurité sont en particulier des câbles de transport d'énergie ou des câbles de transmission basse fréquence, tels que des câbles de contrôle ou de signalisation.

Un des enjeux majeurs de l'industrie du câble est l'amélioration du comportement et des performances des câbles dans des conditions thermiques extrêmes, notamment celles rencontrées lors d'un incendie. Pour des raisons essentiellement de sécurité, il est en effet indispensable de maximiser les capacités du câble à retarder la propagation des flammes d'une part, et à résister au feu d'autre part afin d'assurer une continuité de fonctionnement.

Un ralentissement significatif de la progression des flammes, c'est autant de temps gagné pour évacuer les lieux et/ou pour mettre en oeuvre des moyens d'extinction appropriés. En cas d'incendie, le câble doit pouvoir résister au feu afin de fonctionner le plus longtemps possible et limiter sa dégradation. Un câble de sécurité se doit en outre de ne pas être dangereux pour son environnement, c'est-à-dire de ne pas dégager de fumées toxiques et/ou opaques lorsqu'il est soumis à des conditions thermiques extrêmes.

Du document EP 0 942 439 est connu un câble électrique de sécurité résistant au feu et sans halogène comportant un ensemble de conducteurs électriques isolés, ledit ensemble étant entouré par une gaine externe. Chaque conducteur électrique isolé est formé par un conducteur électrique entouré par une couche isolante obtenue à partir d'une composition comprenant une matière polymérique et au moins une charge formatrice de céramique, ladite couche isolante étant ainsi apte à se convertir au moins superficiellement en l'état de céramique à des hautes températures correspondant à des conditions d'incendie. La matière polymérique de cette unique couche isolante est choisie parmi un polysiloxane et un copolymère d'éthylène, ou leur mélange.

Toutefois, il a été constaté que ce câble de sécurité de l'art antérieur, même s'il présente de bonnes propriétés de résistance au feu, est fragile mécaniquement. Plus particulièrement, les conducteurs électriques isolés sont sensibles aux différentes contraintes mécaniques que subissent typiquement ces câbles lors de leur fabrication, leur transport, leur manipulation, leur installation ou leur raccordement.

On peut également citer le document EP-0 708 455 qui décrit une composition destinée à la réalisation de câbles résistants au feu.

Le but de la présente invention est de pallier les inconvénients des techniques de l'art antérieur en proposant notamment un câble électrique facilement manipulable, limitant les risques de dégradation mécanique des conducteurs électriques isolés qui le composent, tout en conservant des propriétés de résistance au feu excellentes satisfaisant la norme NF C 32-070 CR1.

La présente invention a pour objet un câble électrique comprenant :
- un ensemble de conducteurs électriques isolés, chaque conducteur électrique isolé comportant un conducteur électrique entouré par une couche isolante apte à se convertir au moins superficiellement en l'état de céramique à des hautes températures correspondant à des conditions d'incendie, et
- une gaine extérieure entourant l'ensemble des conducteurs électriques isolés, des espaces vides étant prévus entre ladite gaine et l'ensemble des conducteurs électriques isolés,
caractérisé en ce que :
- ladite couche isolante comprend une première couche réticulée entourant le conducteur électrique, et une deuxième couche réticulée entourant ladite première couche, la première couche étant obtenue à partir d'une première composition comprenant une matrice polymère à base de polyorganosiloxane, et la deuxième couche étant obtenue à partir d'une deuxième composition comprenant une matrice polymère à base de polyoléfine, et
- la couche isolante d'au moins un conducteur électrique isolé est directement en contact physique avec la gaine extérieure.

Dans ce qui suit,
- les termes « matrice polymère à base de polyorganosiloxane » désignent une matrice polymère, comprenant uniquement un ou plusieurs polymères, constituée en majorité de polyorganosiloxane, et
- les termes « matrice polymère à base de polyoléfine » désignent une matrice polymère, comprenant uniquement un ou plusieurs polymères, constituée en majorité de polyoléfine.

Grâce à l'invention, la deuxième couche, dite couche externe, à base de polyoléfine protège mécaniquement la première couche, dite couche interne, à base de polyorganosiloxane. Cette propriété permet à la couche isolante de chaque conducteur électrique isolé d'améliorer les propriétés mécaniques du câble, notamment la dureté, la résistance à l'abrasion et à la déchirure des conducteurs électriques isolés qui le composent, de faciliter l'installation dudit câble, et de rendre le câble plus robuste lors de sa fabrication, quelque soit l'adhésion bonne ou mauvaise entre la première couche et la deuxième couche de la couche isolante.

De plus, le câble électrique de sécurité comprenant la couche isolante selon l'invention satisfait à la norme NF C 32-070 CR1. Les conducteurs électriques sont ainsi protégés contre l'incendie, ou en d'autres termes, le câble électrique permet de garantir un comportement au feu de haute qualité en termes, au moins, de cohésion des cendres.

L'invention telle qu'ainsi définie présente en outre l'avantage d'être économique puisqu'elle permet de diminuer significativement la quantité de polyorganosiloxane dans la couche isolante des conducteurs électriques isolés, tout en ayant de très bonnes propriétés de résistance au feu.

Le polyorganosiloxane, ou polymère polyorganosiloxane, selon la présente invention contient au plus 4 %, de préférence de 0,01 à 3 %, en poids, de groupement vinylé. Lorsque ces polymères polyorganosiloxanes ont des viscosités à 25°C comprises entre 50.000 et 1.000.000 mPa.s, elles sont appelées huiles, mais leur viscosité peut être supérieure à 1.000.000 mPa.s et elles sont alors appelées des gommes.

Dans les compositions selon la présente invention, les polymères polyorganosiloxanes peuvent être des huiles ou des gommes ou des mélanges.

Selon un exemple particulier, le polyorganosiloxane contient au plus 4% en poids de groupes vinyles et possède une viscosité d'au moins 1 million de mPa.s à 25°C, de préférence une viscosité d'environ 20 millions de mPa.s à 25°C.

Ces polyorganosiloxanes sont des polymères linéaires, dont la chaîne diorganopolysiloxanique est constituée essentiellement de motifs de formule R₂SiO.

Cette chaîne est bloquée à chaque extrémité par un motif de formule R₃Si_{0,5} et/ou un radical de formule OR'. Dans ces formules :
- les symboles R, identiques ou différents, représentent des radicaux hydrocarbonés monovalents tels que des radicaux alkyles, par exemple, méthyle, éthyle, propyle, octyle, octadécyle, etc..., des radicaux aryle, par exemple phényle, tolyle, xylyle, etc..., des radicaux aralkyle tels que benzyle, phényléthyle, etc..., des radicaux cycloalkyle et cycloalkényle tels que des radicaux cyclohexyle, cycloheptyle, cyclohexényle, etc..., des radicaux alkényle, par exemple des radicaux vinyle, allyle, etc..., des radicaux alkaryle, des radicaux cyanoalkyle tels qu'un radical cyanoéthyle, etc..., des radicaux halogénoalkyle, halogénoalkényle et halogénoaryle, tels que des radicaux chlorométhyle trifluoro-3,3,3propyle, chlorophényle, dibromophényle, trifluorométhylphényle,
- le symbole R' représente un atome d'hydrogène, un radical alkyle ayant de 1 à 4 atomes de carbone, le radical bétaméthoxy-éthyle.

De préférence, au moins 60 % des groupes R représentent des radicaux méthyles.

La présence, le long de la chaîne diorganopolysiloxanique, de faibles quantités de motifs autres que R₂SiO, par exemple de motifs de formule RSiO_{1,5} et/ou SiO₂ n'est cependant pas exclue dans la proportion d'au plus 2 %, ces % exprimant le nombre des motifs T et/ou Q pour 100 atomes de silicium. Les motifs trifonctionnels, de symbole T, permettent d'obtenir des réseaux tridimensionnels. Les motifs tétrafonctionnels, de symbole Q, conduisent à des produits tridimensionnels dont la structure est analogue à celle des silicates.

A titre d'exemples concrets de motifs de formules R₂SiO et R₃SiO_{0,5} peuvent être cités ceux de formules : (CH₃)₂SiO, CH₃(CH₂=CH)SiO, CH₃(C₆H₅)SiO, (C₆H₅)₂SiO, CH₃(C₂H₅)SiO, (CH₃CH₂CH₂)CH₃SiO, CH₃(n.C₃H₇)SiO, (CH₃)₃SiO_{0,5}, (CH₃)₂(CH₂=CH)SiO_{0,5}, CH₃(C₆H₅)₂SiO_{0,5}, CH₃(C₆H₅)(CH₂=CH)SiO_{0,5},

A titre d'exemples concrets de motifs de radicaux de formule OR' peuvent être cités ceux de formules : OH, -OCH₃, -OC₂H₅, -O-n.C₃H₇, -O-iso.C₃H₇, -O-n.C₄H₉, -OCH₂CH₂OCH₃.

Ces huiles et gommes sont commercialisées par les fabricants de silicone ou peuvent être fabriquées en opérant selon des techniques déjà connues.

La polyoléfine de la deuxième composition selon l'invention peut être choisie parmi les homopolymères et les copolymères d'éthylène, ou leur mélange.

A titre d'exemple préféré d'homopolymères d'éthylène, on peut citer le polyéthylène basse densité (LDPE).

Les copolymères d'éthylène peuvent quant à eux être choisis avantageusement parmi les copolymères d'éthylène / octène (PEO), les copolymères d'éthylène / acétate de vinyle (EVA), les copolymères d'éthylène / butyle acrylate (EBA), les copolymères d'éthylène / méthyle acrylate (EMA) et les copolymères d'éthylène / éthyle acrylate (EEA), les copolymères d'éthylène / propylène / caoutchouc (EPR), et les copolymères d'éthylène / propylène / diène / monomère (EPDM), ou leur mélange.

A titre d'exemple préféré de copolymère d'éthylène, on peut citer les copolymères d'éthylène / acétate de vinyle (EVA).

Dans un mode de réalisation préféré, la première composition comprend en outre au moins une charge formatrice de céramique sous l'effet de températures élevées d'un incendie.

Dans un autre mode de réalisation préféré, la deuxième composition comprend en outre au moins une charge minérale ignifugeante et/ou au moins une charge formatrice de céramique.

La charge formatrice de céramique, ou charge céramisable, mentionnée dans la présente description, peut comprendre au moins une charge minérale du type charge céramique fusible et/ou charge réfractaire, et de préférence au moins une charge céramique fusible et au moins une charge réfractaire, afin que la première couche assure une isolation suffisante lorsque la partie organique de la couche isolante, plus particulièrement la deuxième couche, a disparu suite aux phénomènes de combustion.

Plus particulièrement, la charge céramique fusible a une température de fusion inférieure à une température élevée T, et la charge réfractaire a une température de fusion supérieure à ladite température T. Cette température T est avantageusement d'au moins 750°C, et peut atteindre 1100°C.

La charge céramique fusible peut être au moins une charge minérale choisie parmi les oxydes de bores (e.g. B₂O₃), les borates de zinc anhydres (e.g. 2ZnO 3B₂O₃) ou hydratés (e.g. 4ZnO B₂O₃ H₂O ou 2ZnO 3B₂O₃ 3,5H₂O), et les phosphates de bore anhydres (e.g. BPO₄) ou hydratés, ou un de leurs précurseurs.

Cette charge céramique fusible a typiquement un point de fusion inférieure à 500 °C et donne naissance à un verre lorsque la température dépasse 500°C.

La charge réfractaire peut être au moins une charge minérale choisie parmi les oxydes de magnésium (e.g. MgO), les oxydes de calcium (e.g. CaO), les oxydes de silicium (e.g. SiO₂ ou quartz), les oxydes d'aluminium ou alumines (e.g. Al₂O₃), les oxydes de chrome (e.g. Cr₂O₃), les oxydes de zirconium (e.g. ZrO₂) et les phyllosilicates tels que par exemple les montmorillonites, les sépiolites, les illites, les attapulgites, les talcs, les kaolins ou les micas (e.g. mica muscovite 6 SiO₂ - 3 Al₂O₃ - K₂O - 2H₂O), ou un de leurs mélanges

La charge minérale ignifugeante mentionnée dans la présente description, peut être une charge minérale ignifugeante hydratée, choisie notamment parmi les hydroxydes métalliques tels que par exemple l'hydroxyde de magnésium ou le trihydroxyde d'aluminium.

Selon la présente invention, les espaces vides favorisent la combustion complète de la gaine extérieure soumise au feu, du fait de la présence d'oxygène dans ces espaces, et la transformation de ce gainage en cendres résiduelles se détachant de la couche isolante des conducteurs électriques. De ce fait, les espaces vides ne comprennent par exemple pas de matériau polymérique bourrant (ou matériau polymérique de bourrage) entre l'ensemble de conducteurs électriques isolés et la gaine extérieure. Cette gaine extérieure est typiquement appelée gaine tubante ou gaine tubulaire. De préférence, les espaces vides du câble électrique occupent au moins 10 % de la section (transversale) dudit câble.

En outre, selon une caractéristique supplémentaire, le câble électrique selon l'invention est exempt d'écran métallique tel que par exemple un ruban métallique ou un ruban composite positionné le long dudit câble entre l'ensemble de conducteurs électriques isolés et la gaine extérieure. On entend par les termes « ruban composite » un ruban composé de couches de métal et de polymère. Ledit ruban métallique ou lesdites couches de métal du ruban composite peuvent être par exemple en cuivre ou en aluminium.

Ce type d'écran métallique limite, voire annule, le bénéfice desdits espaces vides et ainsi perturbe significativement le processus de céramisation des cendres des couches isolantes conduisant à la non conformité des essais de résistance au feu.

Dans un mode de réalisation particulier, la gaine extérieure comprend une matrice à base de polyoléfine et au moins une charge minérale ignifugeante hydratée choisie notamment parmi les hydroxydes métalliques tels que par exemple l'hydroxyde de magnésium ou le trihydroxyde d'aluminium.

Cette gaine peut ainsi brûler complètement localement et se transformer en cendres résiduelles sous l'effet des températures élevées d'un incendie sans pour autant être propagateur de l'incendie. Les charges ignifugeantes employées agissent principalement par voie physique en se décomposant de manière endothermique, ce qui a pour conséquence d'abaisser la température du matériau et limiter la propagation des flammes le long du câble.

Afin de garantir un câble dit HFFR pour l'anglicisme « *Halogen-Free Flame Retardant* », le câble électrique selon l'invention ne comprend pas de composés halogénées. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

Dans un mode de réalisation particulier conforme à l'invention, l'épaisseur de la première couche est de 0,10 mm à 1,50 mm et l'épaisseur de la deuxième couche est quant à elle de 0,05 mm à 1,50 mm, notamment lorsque la section (transversale) du conducteur électrique est de 1,5 mm² à 4 mm².

Selon une première variante de ce mode de réalisation, lorsque la section (transversale) du conducteur électrique est de 1,5 mm², l'épaisseur de la première couche est de préférence de 0,30 mm à 0,80 mm, et plus préférentiellement de 0,45 mm. Dans ce cas, l'épaisseur de la deuxième couche est quant à elle de préférence de 0,10 mm à 0,50 mm, et plus préférentiellement de 0,35 mm.

Selon une deuxième variante de ce mode de réalisation, lorsque la section (transversale) du conducteur électrique est de 2,5 mm², l'épaisseur de la première couche est de préférence de 0,30 mm à 0,90 mm, et plus préférentiellement de 0,50 mm. Dans ce cas, l'épaisseur de la deuxième couche est quant à elle de préférence de 0,10 mm à 0,60 mm, et plus préférentiellement de 0,40 mm.

Selon une troisième variante de ce mode de réalisation lorsque la section (transversale) du conducteur électrique est de 4 mm², l'épaisseur de la première couche est de préférence de 0,35 mm à 1 mm, et plus préférentiellement de 0,55 mm. Dans ce cas, l'épaisseur de la deuxième couche est quant à elle de préférence de 0,10 mm à 0,70 mm, et plus préférentiellement de 0,45 mm.

Un autre objet selon l'invention est un procédé de fabrication d'un câble électrique tel que décrit ci-avant conformément à l'invention, caractérisé en ce qu'il comprend les étapes consistant à :
i. former la couche isolante du conducteur électrique isolé par extrusion et réticulation de la première composition et de la deuxième composition autour d'un conducteur électrique,
ii. assembler au moins deux conducteurs électriques isolés tels qu'obtenus à l'étape i, et
iii. extruder une gaine extérieure de façon tubante autour des conducteurs électriques isolés assemblés de l'étape ii.

Selon ce procédé de fabrication, les première et deuxième compositions sont d'une part extrudées, et d'autre part réticulées par les techniques classiques bien connues de l'homme du métier afin d'obtenir une couche isolante extrudée et réticulée.

Selon une première variante du procédé de fabrication d'un câble électrique, l'étape i peut consister à :
i.1 extruder autour d'un conducteur électrique la première composition à l'aide d'une première extrudeuse et la deuxième composition à l'aide d'une deuxième extrudeuse, la première et la deuxième extrudeuses comportant une seule et même tête d'extrusion, pour former à la sortie de l'extrudeuse la couche isolante du conducteur électrique isolé,
i.2 réticuler la couche isolante extrudée de l'étape i.1,
les étapes ii et iii du procédé telles que décrites ci-avant restant inchangées. L'étape i.1 d'extrusion est dite de coextrusion.

Selon une deuxième variante du procédé de fabrication d'un câble électrique, l'étape i peut consister à :
i.1 extruder à l'aide d'une première extrudeuse la première composition et réticuler au moins partiellement la première composition extrudée,
i.2 extruder à l'aide d'une deuxième extrudeuse la deuxième composition, pour former la couche isolante du conducteur électrique isolé, et réticuler la couche isolante extrudée,
les étapes ii et iii du procédé telles que décrites ci-avant restant inchangées.

D'autres caractéristiques et avantages de la présente invention apparaîtront à la lumière des exemples qui vont suivre et de la figure ci-annexée, lesdits exemples et la figure étant donnés à titre illustratif et nullement limitatif.

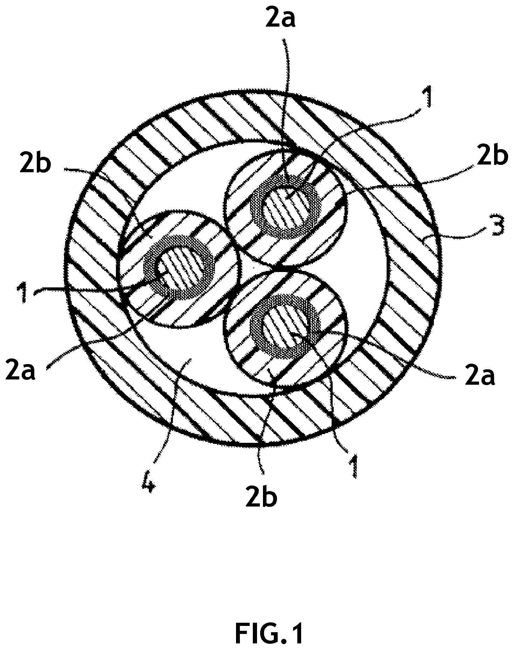

La figure 1 représente une vue schématique en coupe transversale d'un câble électrique selon l'invention.

Pour des raisons de clarté, les mêmes éléments ont été désignés par des références identiques dans cette figure. De même, seuls les éléments essentiels pour la compréhension de l'invention ont été représentés de manière schématique, et ceci sans respect de l'échelle.

Le câble électrique représenté sur la figure 1 comporte trois conducteurs électriques 1, une première couche isolante 2a (couche interne) autour de chaque conducteur électrique 1, une deuxième couche isolante 2b (couche externe) autour de chaque première couche isolante 2a, et une gaine extérieure 3 entourant l'ensemble des trois conducteurs électriques isolés, les conducteurs électriques isolés étant de section transversale sensiblement circulaire. Cette gaine extérieure 3 ménage des espaces vides 4 entre elle et l'ensemble des conducteurs électriques isolés qu'elle entoure. Cette gaine extérieure 3 est dite tubante puisqu'elle laisse les conducteurs électriques isolés libre à l'intérieur de ladite gaine.

La couche interne 2a est réalisée à partir d'une première composition comprenant une matrice polymère à base de polyorganosiloxane, et la couche externe 2b est réalisée à partir d'une deuxième composition comprenant une matrice polymère à base de polyoléfine, ces deux compositions étant extrudées et réticulées.

La gaine extérieure 3 est quant à elle réalisée à partir d'une composition ignifugeante comprenant une matrice polymère à base de polyoléfine.

### Exemples

### Procédé de fabrication d'un câble électrique

Tout d'abord, on prépare les compositions suivantes :
- composition CO1 à base de polyorganosiloxanes et comprenant des charges formatrices de céramique,
- composition CO2 à base d'EVA et comprenant des charges ignifugeantes, et
- composition CO3 étant un mélange 50/50 de la composition CO1 et de la composition CO2,
les compositions CO1 à CO3 comprenant en outre un agent de réticulation de type peroxyde organique.

Pour ce faire, les compositions CO1 à CO3 sont mélangées par exemple dans un mélangeur interne. La température de mélange de la composition CO1 est telle qu'elle permet de ramollir le polyorganosiloxane tout en évitant d'amorcer la décomposition du peroxyde organique. A titre d'exemple, la température de mélange est comprise entre 30°C et 50°C. La température de mélange des compositions CO2 et CO3 est telle qu'elle permet à la polyoléfine de fondre (état fondu) tout en évitant d'amorcer la décomposition du peroxyde organique. A titre d'exemple, la température maximale de mélange est de 115°C.

Les compositions CO1 à CO3 sont ensuite extrudées (étape i) et déposées autour d'un fil électrique en cuivre de diamètre 1,78 mm (section circulaire du cuivre de 2,5 mm²) de sorte à obtenir les couches suivantes :
- une couche isolante CI1 (monocouche) à partir de la composition CO1,
- une couche isolante CI2 (monocouche) à partir de la composition CO2,
- une couche isolante CI3 (monocouche) à partir de la composition CO3, et
- une couche isolante CI4 (bicouche) comportant une première couche CI4-1, de composition identique à la composition CO1, déposée autour du fil électrique, et une deuxième couche CI4-2, de composition identique à la composition CO2, déposée autour de la première couche CI4-1.

Les couches isolantes CI1 à CI4 ont toute une épaisseur identique égale à 0,9 mm.

Plus particulièrement, les compositions CO1 et CO2 sont extrudées sur ledit fil électrique respectivement à l'aide de deux extrudeuses comportant une seule et même tête d'extrusion, la composition CO2 (couche externe) recouvrant la composition CO1 (couche interne). On parle alors de coextrusion des compositions CO1 et CO2. La couche isolante CI4 est donc constituée de la couche interne d'une épaisseur de 0,5 mm et de la couche externe d'une épaisseur de 0,4 mm.

Ensuite, les couches isolantes CI1 à CI4 sont rapidement plongées dans un bain de sel à 240°C afin de réticuler les monocouches CI1 à CI3 et les deux couches de la couche isolante CI4 (étape ii), sous l'action de la décomposition du peroxyde.

Les fils électriques isolés ainsi obtenus, notés fils isolés F1 à F4, ont un diamètre d'environ 3,58 mm.

Dans une étape supplémentaire (étape iii), on assemble ensuite par trois les fils électriques isolés respectifs F1 à F4 à l'aide d'une assembleuse, le procédé d'assemblage étant bien connu de l'homme du métier.

Enfin, une composition ignifugeante comprenant une matrice polymère à base de polyoléfine est extrudée de façon tubante autour de chaque groupe de trois fils conducteurs électriques F1 à F4 assemblés, pour former une gaine extérieure.

Les câbles électriques ainsi obtenus sont notés câbles CE1 à CE4.

### Propriété de résistance à la traction

Les propriétés mécaniques de résistance à la traction sont déterminées selon la norme NF EN 60811-1-1.

Pour ce faire, des éprouvettes tubulaires sont préparées à partir des couches isolantes des fils isolés F1 à F4. Les éprouvettes ainsi préparées et dont la surface est mesurée avec précision, sont ensuite testées sur un banc de traction mécanique avec une vitesse de traction de 250 mm/mn.

La résistance à la traction est ainsi la contrainte de traction maximale supportée par l'éprouvette au cours de l'essai de traction poursuivi jusqu'à la rupture.

Les résultats de ces essais sont rassemblés dans le tableau 1 ci-après.

### Propriété de résistance à l'abrasion

La propriété mécanique de résistance à l'abrasion est déterminée selon la norme EN 50305 partie 5.2.

Pour ce faire, des échantillons correspondant à des portions de 75 cm de long des fils isolés F1 à F4, sont positionnés dans un dispositif d'essai d'abrasion tel que décrit dans ladite norme.

Chaque échantillon subit quatre essais. Chaque essai est terminé lorsque l'arête de coupe dudit dispositif atteint l'âme conductrice desdits fils isolés.

La mesure de la résistance à l'abrasion correspond à la valeur moyenne du nombre de cycles effectués dans les quatre essais.

Les résultats de ces essais sont rassemblés dans le tableau 1 ci-après.

### Propriété de résistance à l'écrasement

La propriété mécanique de résistance à l'écrasement est déterminée selon la norme EN 50305 partie 5.6.

Pour ce faire on utilise un appareil de traction fonctionnant en compression, muni d'un dispositif d'enregistrement de la force nécessaire pour entraîner une arête de coupe à aiguille sur les couches isolantes des fils isolés F1 à F4. Un circuit de détection à basse tension, conçu pour arrêter l'appareil quand l'arête traverse l'enveloppe isolante, est introduit dans l'installation.

La force appliquée sur l'arête de coupe qui l'entraîne sur l'enveloppe isolante est augmentée à taux constant jusqu'à ce qu'il y ait contact avec l'âme conductrice.

On effectue quatre essais sur l'échantillon et on enregistre la force correspondant au contact électrique.

Les résultats de ces essais sont rassemblés dans le tableau 1 ci-après.

### Propriétés de résistance au feu

La norme NF C 32-070 CR1 concerne la durée de fonctionnement des câbles électriques brûlant dans des conditions définies. La résistance au feu est à mettre sur le compte de la production de cendres qui doivent présenter une certaine cohésion permettant de conserver un isolement suffisant pour le fonctionnement des câbles électriques.

Dans cet essai, des échantillons des câbles électriques CE1 à CE4 sont placés dans un four dont la température atteint 920°C en 50 minutes et cette température est maintenue ensuite pendant 15 minutes. Durant cet essai, lesdits échantillons alimentés par une tension nominale de 500 V sont soumis à des chocs réguliers (toutes les 30 secondes). L'essai est satisfaisant si l'échantillon de câble ne présente pas de défaut électrique (claquage ou court-circuit) au bout de 65 minutes.

Les résultats de ces essais sont rassemblés dans le tableau 2 ci-après.

**Tableau 1**

| **Fil isolé** | **F1** | **F2** | **F3** | **F4** |
|---|---|---|---|---|
| **Résistance à la traction (MPa)** | 6-8 | 18 | 8-10 | 12 |
| **Résistance à l'abrasion (cycles)** | 6-7 | / | 7-8 | 210-280 |
| **Résistance à l'écrasement (N)** | 16-17 | / | 30-40 | 59-60 |

**Tableau 2**

| **Câble électrique** | **CE1** | **CE2** | **CE3** | **CE4** |
|---|---|---|---|---|
| **CR1** | Passe (> 65 minutes) | Echec (< 30 minutes) | Echec (< 40 minutes) | Passe (> 65 minutes) |

Le fil électrique isolé F4 constitutif du câble électrique CE4 présente de façon significative des propriétés mécaniques, telles que la résistance à la traction, à l'abrasion et à l'écrasement, supérieures au fil électrique F1 constitutif du câble électrique CE1. En outre, le câble électrique CE4 satisfait à la norme de résistance au feu NF C 32-070 CR1, ce qui n'est pas le cas des câbles électriques CE2 et CE3.

Enfin, la quantité de polyorganosiloxane est diminuée environ de moitié entre la couche isolante CI4 conforme à l'invention et la couche isolante CI1, pour une épaisseur totale de la couche isolante identique.

## Revendications

1. Câble électrique comprenant :
- un ensemble de conducteurs électriques isolés, chaque conducteur électrique isolé comportant un conducteur électrique (1) entouré par une couche isolante apte à se convertir au moins superficiellement en l'état de céramique à des hautes températures correspondant à des conditions d'incendie, et
- une gaine extérieure (3) entourant l'ensemble des conducteurs électriques isolés, des espaces vides (4) étant prévus entre ladite gaine (3) et l'ensemble des conducteurs électriques isolés,
**caractérisé en ce que** :
- ladite couche isolante comprend une première couche (2a) réticulée entourant le conducteur électrique (1), et une deuxième couche (2b) réticulée entourant ladite première couche, la première couche (2a) étant obtenue à partir d'une première composition comprenant une matrice polymère à base de polyorganosiloxane, et la deuxième couche (2b) étant obtenue à partir d'une deuxième composition comprenant une matrice polymère à base de polyoléfine, et
- la couche isolante d'au moins un conducteur électrique isolé est directement en contact physique avec la gaine extérieure (3).

2. Câble selon la revendication 1, **caractérisé en ce que** la première composition comprenant en outre au moins une charge formatrice de céramique

3. Câble selon la revendication 1, **caractérisé en ce que** la deuxième composition comprenant en outre au moins une charge minérale ignifugeante et/ou au moins une charge formatrice de céramique.

4. Câble selon l'une quelconque des revendications précédentes, **caractérisé en ce que** la gaine extérieure (3) comprend une matrice polymère à base de polyoléfine et au moins une charge minérale ignifugeante hydratée.

5. Câble selon l'une quelconque des revendications précédentes, **caractérisé en ce que** lesdits espaces vides (4) occupent au moins 10 % de la section dudit câble.

6. Câble selon l'une quelconque des revendications précédentes, **caractérisé en ce qu'**il ne comprend pas de composés halogénés.

7. Câble selon l'une quelconque des revendications précédentes, **caractérisé en ce que** l'épaisseur de la première couche (2a) est de 0,10 mm à 1,50 mm, et l'épaisseur de la deuxième couche (2b) est de 0,05 mm à 1,50 mm.

8. Câble selon la revendication 7, **caractérisé en ce que** la section du conducteur électrique (1) est de 1,5 mm² à 4 mm².

9. Câble selon l'une quelconque des revendications précédentes, **caractérisé en ce que** la première couche (2a) et la deuxième couche (2b) sont des couches extrudées.

10. Câble selon la revendication 9, **caractérisé en ce que** la première couche (2a) étant directement en contact physique avec la deuxième couche (2b).

11. Câble selon la revendication 9 ou 10, **caractérisé en ce que** la première couche (2a) est directement en contact physique avec le conducteur électrique (1).

12. Câble selon l'une quelconque des revendications précédentes, **caractérisé en ce que** la gaine extérieure (3) est une gaine tubulaire.

13. Câble selon la revendication 12, **caractérisé en ce que** la deuxième couche (2b) d'au moins un conducteur électrique isolé est directement en contact physique avec la gaine extérieure (3).

14. Câble selon la revendication 12 ou 13, **caractérisé en ce que** la deuxième couche (2b) d'au moins un conducteur électrique isolé est directement en contact physique avec des espaces vides (4).

15. Procédé de fabrication d'un câble électrique tel que défini aux revendications 1 à 14, **caractérisé en ce qu'**il comprend les étapes consistant à :
i. former la couche isolante du conducteur électrique isolé par extrusion et réticulation de la première composition et de la deuxième composition autour d'un conducteur électrique,
ii. assembler au moins deux conducteurs électriques isolés tels qu'obtenus à l'étape i, et
iii. extruder une gaine extérieure de façon tubante autour des conducteurs électriques isolés assemblés de l'étape ii.

## Patentansprüche

1. Stromkabel, umfassend:
- eine Gruppe von isolierten elektrischen Leitern, wobei jeder isolierte elektrische Leiter einen elektrischen Leiter (1) umfasst, den eine Isolierschicht umschließt, die dazu geeignet ist, bei hohen Temperaturen, die Brandbedingungen entsprechen, mindestens auf der Oberfläche in den Keramikzustand überzugehen, und
- eine äußere Ummantelung (3), die die Gruppe von isolierten elektrischen Leitern umschließt, wobei Leerräume (4) zwischen der Ummantelung (3) und der Gruppe von isolierten elektrischen Leitern vorgesehen sind,
**dadurch gekennzeichnet, dass**:
- die Isolierschicht umfasst: eine erste vernetzte Schicht (2a), die den elektrischen Leiter (1) umschließt, und eine zweite vernetzte Schicht (2b), die die erste Schicht umschließt, wobei die erste Schicht (2a) aus einer ersten Zusammensetzung gebildet wird, die eine Polymermatrix auf Polyorganosiloxanbasis umfasst, und die zweite Schicht (2b) aus einer zweiten Zusammensetzung gebildet wird, die eine Polymermatrix auf Polyolefinbasis umfasst, und
- die Isolierschicht mindestens eines isolierten elektrischen Leiters im direkten physischen Kontakt zur äußeren Ummantelung (3) steht.

2. Kabel nach Anspruch 1, **dadurch gekennzeichnet, dass** die erste Zusammensetzung ferner mindestens eine keramikbildende Ladung umfasst.

3. Kabel nach Anspruch 1, **dadurch gekennzeichnet, dass** die zweite Zusammensetzung ferner mindestens eine flammhemmende Mineralladung und/oder mindestens eine keramikbildende Ladung umfasst.

4. Kabel nach einem der vorstehenden Ansprüche, **dadurch gekennzeichnet, dass** die äußere Ummantelung (3) eine Polymermatrix auf Polyolefinbasis und mindestens eine hydrierte flammhemmende Mineralladung umfasst.

5. Kabel nach einem der vorstehenden Ansprüche, **dadurch gekennzeichnet, dass** die Leerräume (4) mindestens 10 % des Querschnitts des Kabels einnehmen.

6. Kabel nach einem der vorstehenden Ansprüche, **dadurch gekennzeichnet, dass** es keine Halogenverbindungen umfasst.

7. Kabel nach einem der vorstehenden Ansprüche, **dadurch gekennzeichnet, dass** die Stärke der ersten Schicht (2a) 0,10 - 1,50 mm beträgt und die Stärke der zweiten Schicht (2b) 0,05 - 1,50 mm beträgt.

8. Kabel nach Anspruch 7, **dadurch gekennzeichnet, dass** der Querschnitt des elektrischen Leiters (1) 1,5 - 4 mm² beträgt.

9. Kable nach einem der vorstehenden Ansprüche, **dadurch gekennzeichnet, dass** die erste Schicht (2a) und die zweite Schicht (2b) extrudierte Schichten sind.

10. Kabel nach Anspruch 9, **dadurch gekennzeichnet, dass** die erste Schicht (2a) im unmittelbaren physischen Kontakt zur zweiten Schicht (2b) steht.

11. Kabel nach Anspruch 9 oder 10, **dadurch gekennzeichnet, dass** die erste Schicht (2a) im unmittelbaren physischen Kontakt zum elektrischen Leiter (1) steht.

12. Kabel nach einem der vorstehenden Ansprüche, **dadurch gekennzeichnet, dass** die äußere Ummantelung (3) rohrförmig ist.

13. Kabel nach Anspruch 12, **dadurch gekennzeichnet, dass** die zweite Schicht (2b) mindestens eines isolierten elektrischen Leiters im unmittelbaren physischen Kontakt zur äußeren Ummantelung (3) steht.

14. Kabel nach Anspruch 12 oder 12, **dadurch gekennzeichnet, dass** die zweite Schicht (2b) mindestens eines isolierten elektrischen Leiters im unmittelbaren physischen Kontakt zu den Freiräumen (4) steht.

15. Verfahren zum Herstellen eines Stromkabels nach Anspruch 1 - 14, **dadurch gekennzeichnet, dass** es die Schritte umfasst:
i. Bilden der Isolierschicht des isolierten elektrischen Leiters durch Extrusion und Vernetzung der ersten Zusammensetzung und der zweiten Zusammensetzung um einen elektrischen Leiter,
ii. Zusammenstellen von mindestens zwei isolierten elektrischen Leitern, wie sie aus dem Schritt i resultieren, und
iii. Extrudieren einer rohrförmigen äußeren Ummantelung um die zusammengestellten isolierten elektrischen Leiter aus Schritt ii.

## Claims

1. Electrical cable comprising:
- a set of insulated electrical conductors, wherein each insulated electrical conductor comprises an electrical conductor (1) surrounded by an insulating layer able to convert, at least superficially, to the ceramic state at high temperatures corresponding to fire conditions, and
- an outer sheath (3) surrounding all the insulated electrical conductors, wherein empty spaces (4) are provided between the sheath (3) and all the insulated electrical conductors,
**characterized in that**
- the insulating layer comprises a first crosslinked layer (2a) surrounding the electrical conductor (1), and a second crosslinked layer (2b) surrounding the first layer, wherein the first layer (2a) is obtained from a first composition comprising a polyorganosiloxane-based polymer matrix, while
- the second layer (2b) is obtained from a second composition comprising a polyolefin-based polymer matrix, and
- the insulating layer of at least one insulated electrical conductor is in direct physical contact with the outer sheath (3).

2. Cable according to claim 1, **characterized in that** the first composition further comprises at least one ceramic-forming filler

3. Cable according to claim 1, **characterized in that** the second composition further comprises at least one flame retardant mineral filler and/or at least one ceramic-forming filler.

4. Cable according to any one of the preceding claims, **characterized in that** the outer sheath (3) comprises a polymer matrix based on polyolefin and at least one hydrated flame retardant mineral filler.

5. Cable according to any one of the preceding claims, **characterized in that** the empty spaces (4) occupy at least 10% of the cross-section of the cable.

6. Cable according to any one of the preceding claims, **characterized in that** it does not include halogenated compounds.

7. Cable according to any one of the preceding claims, **characterized in that** the thickness of the first layer (2a) is from 0.10 mm to 1.50 mm, while the thickness of the second layer (2b) is from 0.05 mm to 1.50 mm.

8. Cable according to claim 7, **characterized in that** the cross-section of the electrical conductor (1) is 1.5 mm² to 4 mm².

9. Cable according to any one of the preceding claims, **characterized in that** the first layer (2a) and the second layer (2b) are extruded layers.

10. Cable according to claim 9, **characterized in that** the first layer (2a) is directly in physical contact with the second layer (2b).

11. Cable according to claim 9 or 10, **characterized in that** the first layer (2a) is in direct physical contact with the electrical conductor (1).

12. Cable according to any one of the preceding claims, **characterized in that** the outer sheath (3) is a tubular sheath.

13. Cable according to claim 12, **characterized in that** the second layer (2b) of at least one insulated electrical conductor is in direct physical contact with the outer sheath (3).

14. Cable according to claim 12 or 13, **characterized in that** the second layer (2b) of at least one insulated electrical conductor is in direct physical contact with the empty spaces (4).

15. Method of manufacturing an electric cable as defined in claims 1 to 14, **characterized in that** it comprises the steps of:
i. forming the insulating layer of the insulated electrical conductor by extrusion, and crosslinking of the first composition and the second composition around an electrical conductor,
ii. assembling at least two insulated electrical conductors as obtained in step i, and
iii. extruding an outer sheath in the manner of a tube around the assembled insulated electrical conductors of step ii.
